# EUROPEAN PATENT APPLICATION

(11) **EP 3 961 284 A1**
(43) Date of publication of application: **02.03.2022**
(21) Application number: 20193458.5
(22) Date of filing: 28.08.2020
(51) Int. Cl.: G02B 21/00, G02B 21/24, G02B 21/36, G02B 21/18, G02B 15/14, G02B 15/24, G02B 7/10, G02B 21/02, G02B 21/22

(54) **AN IMAGING SYSTEM FOR AN OBJECT, A MICROSCOPE, A CARRIER AND A METHOD FOR IMAGING AN OBJECT**

(71) Applicant: Leica Instruments (Singapore) Pte. Ltd., 608924 Singapore (SG)
(72) Inventor: WEIGER, Ulrich, 9462 Montlingen (CH); GUENTERT, Michael, 9435 Heerbrugg (CH)
(74) Representative: 2SPL Patentanwälte PartG mbB

(57) **Abstract**

An embodiment of an imaging system 100, 200 for an object 101, comprises a parfocal zoom system 102 configured to receive a beam of light and to generate a real image 103 on a surface of an imaging sensor 104, wherein the real image 103 is based on a first beam portion. The imaging system 100, 200 further comprises a beam splitter 106 to direct a second beam portion outside the parfocal zoom system 102. Further, the imaging system 100, 200 comprises an optical system 108 configured to receive the second beam portion and to provide a viewable output beam.

## Description

### Technical field

Examples relate to imaging systems for objects, microscopes, carriers and methods for imaging objects.

### Background

An imaging system such as a camera or microscope comprising a zoom system may enable to observe objects with higher magnifications. Physicians can use surgical microscopes to observe magnified anatomical structures via eye-pieces without changing their perspective. Surgical microscopes may additionally display the magnified images on screens to enable a simultaneous observation of the structures by other observers.

Typically, imaging systems with both features for observing are implemented with an afocal zoom system. An afocal zoom system comprises a lens system that uses incoming parallel beams and outputs parallel beams as well (the zoom system images into infinity). Together with an afocal zoom system, further optical elements can be used to make the infinite beams observable by generating an image with a finite focus.

Afocal zoom systems with both previously described features for observing are limited in their construction. To arrange the elements of the imaging system, additional space may be required for a microscope's height which may not be acceptable for several applications. In an attempt to horizontally arrange the required optical elements within the imaging system, optical limitations are often reached which is similarly undesirable.

### Summary

Hence, there is a desire for an improved imaging system for observing objects.

This desire is addressed by the subject matter of the independent claims.

An embodiment of an imaging system for an object comprises a parfocal zoom system configured to receive a beam of light and to generate a real image on a surface of an imaging sensor, wherein the real image is based on a first beam portion. The imaging system further comprises a beam splitter to direct a second beam portion outside the parfocal zoom system. Further, the imaging system comprises an optical system configured to receive the second beam portion and to provide a viewable output beam. The parfocal zoom system may enable a true zoom for the imaging system. The parfocal zoom system can be beneficial for a construction of the imaging system due to a compact assembling of optical elements. The parfocal zoom system may generate a converging beam path which can be directed to the beam splitter. The beam splitter can split the converging beam path into two beam paths for observing images of the object. A first beam path can be used for generating the real image on the surface of the imaging sensor and a second beam path can be used for providing a viewable output beam by means of the optical system.

According to some embodiments, the optical system comprises a lens configured to project an intermediate image in the second beam portion to infinity. The lens may enable to generate infinite beams based on the second portion. By using the infinite beams, the intermediate image can be projected to a greater distance from the beam splitter. This can be advantageous for constructing the imaging system more flexibly e.g. by considering ergonomic requirements as well.

According to some embodiments, the optical system comprises a tube lens configured to focus the second beam portion to a further intermediate image. The tube lens can form the infinite beams of the second beam portion to converging beams. The converging beams can generate the further intermediate image which can be used for providing the viewable output beam.

According to some embodiments, the optical system comprises an ocular to view the further intermediate image. Apart from observing the real image via the imaging sensor, a virtual image can be generated and additionally viewed by using the ocular. The ocular can be used to project the further intermediate image to a virtual image to be viewable by human eyes. Due to the optical properties of the ocular, the virtual image may have a higher magnification compared to the real image being generated on the surface of the imaging sensor.

According to some embodiments, the imaging system further comprises an objective configured to project a first image of the object which is viewed by the parfocal zoom system. The objective can receive incoming light which may be generated by the object e.g. due to reflection or emission. The objective can generate the beam of light for the parfocal zoom system. By using the objective, magnification capability of the imaging system may increase due to optical properties of the objective.

According to some embodiments, the parfocal zoom system comprises two movable lens systems and a fixed lens system, wherein the moveable lens systems are movable between the fixed lens system and the beam splitter. By changing the positions of the moveable lens systems between the two fixed optical elements, images can be magnified and can remain in focus, simultaneously.

An embodiment of a microscope comprises the imaging system according to one of the previous embodiments. The microscope may comprise further optical elements or hardware components e.g. to improve an image quality, a handling for an operator of the microscope or to provide further features for viewing images.

According to some embodiments, the microscope is a surgical microscope. The surgical microscope may comprise adapted components to meet the needs of physicians during surgery e.g. by enabling an adaptable field of view, a higher mobility or stability or a smaller construction of the microscope.

An embodiment of a carrier is configured to connect to an imaging system for an object and to an optical system. The imaging system comprises a parfocal zoom system configured to receive a beam of light and to generate a real image on a surface of an imaging sensor, wherein the real image is based on a first beam portion. Further, the imaging system comprises a beam splitter to direct a second beam portion outside the parfocal zoom system and a lens configured to receive the second beam portion. The optical system comprises a tube lens for focusing the second beam portion and an ocular configured to generate a virtual image using the second beam portion. The carrier may facilitate to detachably mount optical systems to the imaging system. By this means, the imaging properties of the imaging system can be adjusted according to imaging specifications.

An embodiment of a method for imaging an object comprises receiving a beam of light and generating a real image on a surface of an imaging sensor by means of a parfocal zoom system, wherein the real image is based on a first beam portion. The method further comprises directing a second beam portion outside the parfocal zoom system by means of a beam splitter. Further, the method comprises receiving the second beam portion and providing a viewable output beam by means of an optical system. The parfocal zoom system may enable a true zoom for the imaging system. The parfocal zoom system can be beneficial for a construction of the imaging system due to a compact assembling of optical elements. The parfocal zoom system may generate a converging beam path which can be directed to the beam splitter. The beam splitter can split the converging beam path into two beam paths for observing images of the object. A first beam path can be used for generating the real image on the surface of the imaging sensor and a second beam path can be used for providing a viewable output beam by means of the optical system.

According to some embodiments, providing a viewable output beam comprises projecting an intermediate image in the second beam portion to infinity by means of a lens. The lens may enable to generate infinite beams based on the second portion. By using the infinite beams, the intermediate image can be projected to a greater distance from the beam splitter. This can be advantageous for constructing the imaging system more flexibly e.g. by considering ergonomic requirements as well.

According to some embodiments, providing a viewable output beam comprises focusing the second beam portion to a further intermediate image by means of a tube lens. The tube lens can form the infinite beams of the second beam portion to converging beams. The converging beams can generate the further intermediate image which can be used for providing the viewable output beam.

According to some embodiments, the method further comprises using an ocular to view the further intermediate image. Apart from observing the real image via the imaging sensor, a virtual image can be generated and additionally viewed by using the ocular. The ocular can be used to project the further intermediate image to a virtual image to be viewable by human eyes. Due to the optical properties of the ocular, the virtual image may have a higher magnification compared to the real image being generated on the surface of the imaging sensor.

According to some embodiments, the method further comprises using an objective to project a first image of the object which is viewed by the parfocal zoom system. The objective can receive incoming light which may be generated by the object e.g. due to reflection or emission. The objective can generate the beam of light for the parfocal zoom system. By using the objective, magnification capability of the imaging system may increase due to optical properties of the objective.

According to some embodiments, the method further comprises moving two lens systems of the parfocal zoom system between a fixed lens system and the beam splitter to change a zoom. By changing the positions of the moveable lens systems between the two fixed optical elements, images can be magnified and can remain in focus, simultaneously.

### Short description of the Figures

Some examples of apparatuses and/or methods will be described in the following by way of example only, and with reference to the accompanying figures, in which
Fig. 1 illustrates an embodiment of an imaging system for an object;
Fig. 2 illustrates another embodiment of an imaging system for an object;
Fig. 3 illustrates examples of parfocal zoom systems with different positions of movable lens systems;
Fig. 4 illustrates an embodiment of a microscope comprising the imaging system;
Fig. 5 illustrates an embodiment of a carrier; and
Fig. 6 illustrates a flow chart of an embodiment of a method for imaging an object.

### Detailed Description

Various examples will now be described more fully with reference to the accompanying drawings in which some examples are illustrated. In the figures, the thicknesses of lines, layers and/or regions may be exaggerated for clarity.

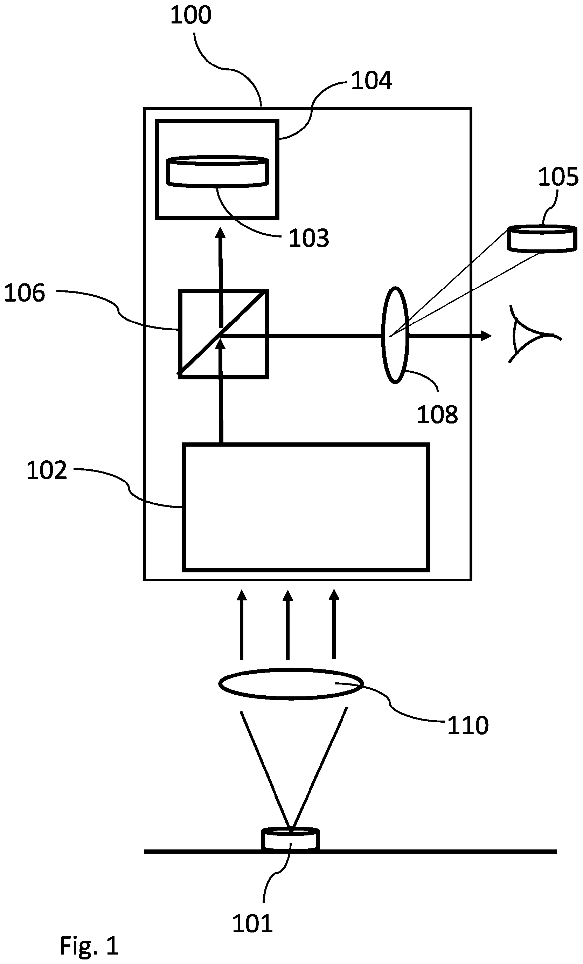

Fig. 1 shows an embodiment of an imaging system 100 with a parfocal zoom system 102, a beam splitter 106, an imaging sensor 104 and an optical system 108. The imaging system 100 can be used for observing an object 101 with the imaging sensor 104 and the optical system 108, simultaneously. The parfocal zoom system 102 is configured to receive a beam of light corresponding to the object 101 and may enable an optical zoom for the imaging system 100. For example, the beam of light may comprise parallel beams.

The parfocal zoom system 102 is configured to generate a real image 103 on a surface of an imaging sensor 104 wherein the real image 103 is based on a first beam portion. The parfocal zoom system 102 may generate converging beams which can be split into two separate beams by the beam splitter 106. The first beam portion can be used for generating the real image 103 on the surface of the imaging sensor 104. Generally, a real image can be generated by a converging optical element if an object or image is placed outside the focal length of the converging optical element.

The beam splitter 106 can further direct a second beam portion outside the parfocal zoom system 102. The second beam portion can be received by the optical system 108 to provide a viewable output beam. By providing the viewable output beam a virtual image 105 can be viewed. The virtual image 105 may have the same image content compared to the real image 103 generated on the surface of the imaging sensor 104. The virtual image 105 may have a different magnification compared to the real image 103 e.g. due to imaging properties of the optical system 108. The virtual image 105 and the real image 103 can be generated on different imaging planes at different locations. Generally, a virtual image can be generated by using diverging or converging optical elements. To generate a virtual image with e.g. a converging lens, an object or image shall have a position inside the focal length of the converging lens.

The imaging system 100 may provide an observer a true optical zoom by the parfocal zoom system 102 and two features for observing the object 101 by the imaging sensor and the optical system 108. By this means, sharp magnified images of the object can be generated and observed in two different ways.

The observation of the object 101 by using the imaging sensor 104 can be advantageous e.g. for displaying the real image of the object 103. Displaying the real image might be suitable to provide the real image 103 for more than one observer. For example in surgery, images of anatomical structures can be displayed on a screen which can be observed by several physicians simultaneously. Sensors can be also beneficial to observe light which are invisible for the human eye. For example, imaging sensors 104 can be sensitive to e.g. visible, infrared or ultraviolet light such as CCD-sensors, CMOS-sensors, photodiodes or other arbitrary sensors suitable for imaging.

In the following, observing the object 101 by using the optical system 108 is discussed in further detail.

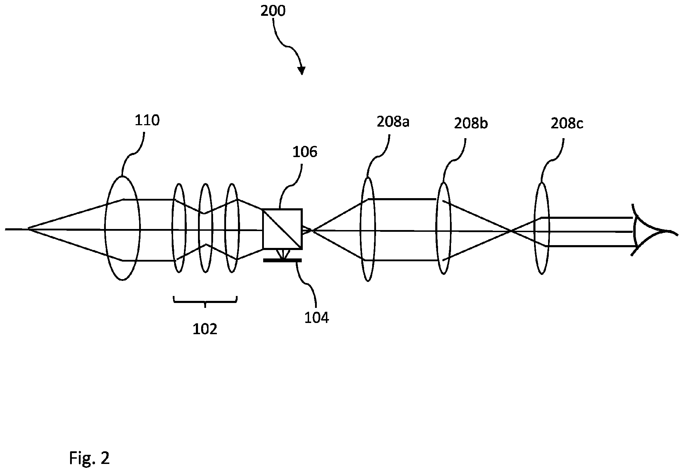

Fig. 2 shows another embodiment of an imaging system 200, wherein the optical system 108 comprises a lens 208a configured to project an intermediate image in the second beam portion to infinity. The described converging beams generated by the parfocal zoom system 102 can be used to generate the intermediate image e.g. in front of the lens 208a. The lens 208a can project the intermediate image to infinity by generating an infinite beam. The infinite beam might be advantageous to project the intermediate image along a greater distance within the imaging system 200. By this means, imaging systems can be constructed e.g. with greater flexibility. For example, eyepieces can be placed according to ergonomic requirements such that an observer might be able to view the further intermediate image with a convenient head position.

In the embodiment of the imaging system 200, the optical system 108 comprises a tube lens 208b configured to focus the second beam portion to a further intermediate image. The infinite beam generated by the lens may have an infinity focus. The tube lens 208b can be used to project the infinite beam again into a converging beam. By using the converging beam, the further intermediate image with a finite focus can be generated within the imaging system 200. The further intermediate image can be further used for providing the viewable output beam.

In the embodiment of the imaging system 200, the optical system 108 comprises an ocular 208c to view the further intermediate image. The further intermediate image may correspond to a real image within the imaging system 200. The ocular 208c can project the real further intermediate image into the virtual image. By this means, the further intermediate image can be viewable for e.g. human eyes. Due to the ocular 208c, the virtual image may have a higher magnification compared to the real image being generated on the surface of the imaging sensor 104. Hence, the ocular 208c may also have an influence on the magnification capability of the imaging system 200.

In another implementation, the optical system 108 comprises only the ocular 208c without having the lens 208a and the tube lens 208b. This might be appropriate, if it is desired to reduce the size of the imaging system or for other construction related reasons.

In the shown embodiment, the imaging system 200 further comprise an objective 110 configured to project a first image of the object which is viewed by the parfocal zoom system 102. The objective 110 can be used to generate the beam of light out of incoming beams corresponding to the object 101. For example, incoming beams may be generated by reflection or emission of light. Reflected light may be due to illumination of the object by a light source. Emitted light may be due to fluorescence emission of the object e.g. excited by illumination. For example, the beam of light may comprise infinite beams which can be projected by the parfocal zoom system 102. In another implementation, the objective may generate other than infinite beams such as converging beams. Converging beams may be further projected to infinite beams e.g. by further optical elements. Generally, a characteristic of the beam of light may depend on optical elements which are placed in front of the parfocal zoom system 102.

Similar to the ocular 208c, the objective 110 may have an influence on the magnification capability of the imaging system 200 due to the optical properties of the objective 110.

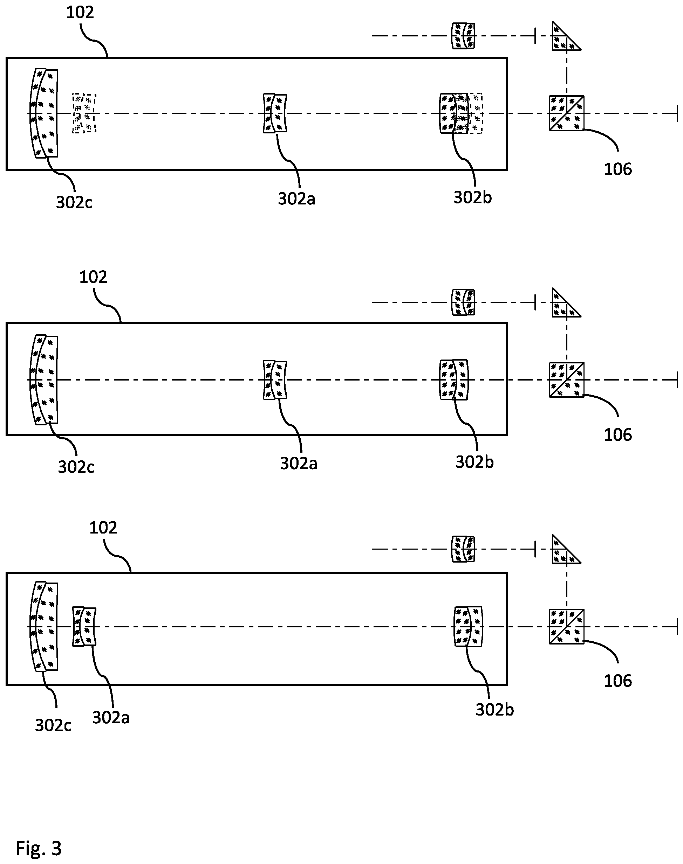

In an implementation of the imaging system 200, the parfocal zoom system 102 comprises two movable lens systems 302a-b and a fixed lens system 302c. Fig. 3 illustrates three examples of parfocal zoom systems 102 with different movable lens system positionings. The moveable lens systems 302a-b may be moved between the fixed lens system 302c and the beam splitter 106 of the imaging system 200.

In the first example of Fig. 3, a maximum zoom of the parfocal zoom system 102 is given by the positions of the moveable lens systems 302a-b drawn with solid lines. In addition, a minimum zoom of the parfocal zoom system 102 is illustrated by the positions of the moveable lens systems 302a-b drawn with dashed lines.

In the second and third example of Fig. 3, movable lens positionings for maximum and minimum zoom are illustrated, separately.

In contrast to an afocal zoom system, the parfocal zoom system 102 may enable to magnify an image while keeping the focus of the image. As the image remains in focus, e.g. manual refocusing might be not necessary after zooming. Hence, parfocal zoom systems 102 may provide optical zoom which enables to generate sharp images with different magnifications. As parfocal zoom systems 102 may generate converging beams rather than infinite beams, the lens 208a can be used e.g. after beam splitting to generate infinite beams.

The parfocal zoom system 102 can be also beneficial for the construction of the imaging system 200. For example, the parfocal zoom system 102 may enable a reduction of the size of the imaging system 200 due to a compact assembling of optical elements. In contrast to parfocal zoom systems, afocal zoom systems project images to infinity. For this reason, an afocal zoom system often requires an additional lens to focus an image e.g. to a sensor plane. A parfocal zoom system can operate without using an additional lens as the parfocal zoom system can focus the image directly to the sensor plane. Therefore, the usage of a parfocal zoom system may be beneficial for assembling an imaging system in a more compact design.

A change in position of one moveable lens system 302a may need a change in position of the other movable lens system 302b to generate the intermediate image at a fixed image plane. For example, the second example of Fig. 3 may be considered as an initial condition of the parfocal zoom system 102. For the shown initial condition, a sharp intermediate image may be generated at a defined image plane. If the moveable lens system 302a is moved closer to the fixed lens system 302c, the other moveable lens system 302b may need to be moved closer to the beam splitter 106. As a consequence, the generated intermediate image can be sharp in the same image plane but e.g. of smaller size. Hence, the second moveable lens system 302b may compensate the relocation of the first moveable lens system 302a for appropriate focusing.

Lens systems such as the moveable lens systems 302a-b or the fixed lens system 302a may comprise one or more optical elements such as a combination of a concave and a convex lens. The parfocal zoom system 102 may comprise more than two moveable lens systems 302a-b to provide a true zoom.

The imaging system 200 may comprise the objective 110 to project a first image of the object to the parfocal zoom system 102. In other implementations, the objective 110 may be a component of e.g. a microscope comprising the imaging system 100.

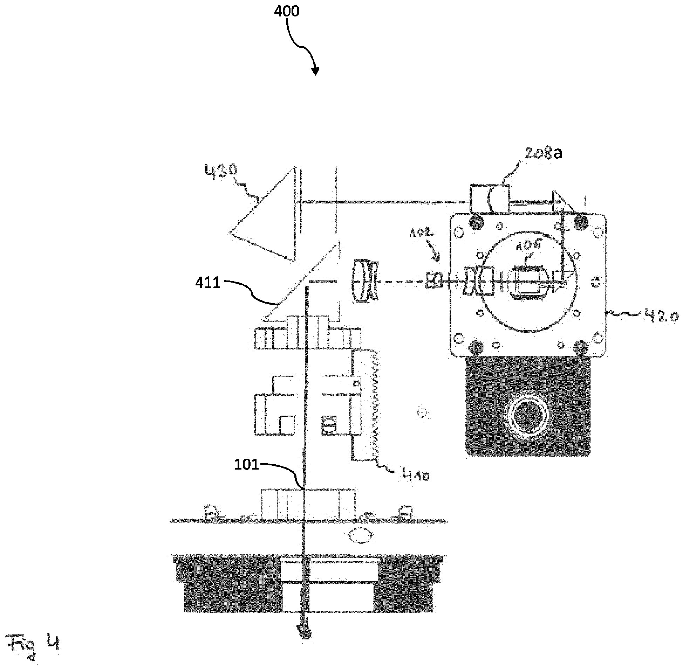

For example, the imaging system 100 or 200 can be used in camera systems, in video systems, in microscopes such as stereoscopic microscopes or any arbitrary system to image, view, magnify or focus an object to be observed. Fig. 4 illustrates an embodiment of a microscope 400 comprising the imaging system 200 to observe an object 101. The object 101 can be placed on a microscope stage and can be imaged by a main lens group 410. The main lens group 410 may comprise one or more optical elements such as the objective 110 and e.g. further lenses or filters. The beam of light may be generated by the main lens group 410 and may be reflected by a mirror 411 to reach the parfocal zoom system 102. The parfocal zoom system 102 may generate a converging beam which can be split into two beam paths by the beam splitter 106. The first beam portion can be used to generate the real image of the object 101 on the surface of the imaging sensor e.g. placed in a camera head 420. The second beam portion can be used by the optical system comprising e.g. the lens 208a, the tube lens 208b and the ocular 208c to provide the viewable output beam. By this means, the virtual image can be viewed by using an interface 430. The microscope 400 may comprise further elements than described or illustrated such as further lenses, further beam splitter, further sensors, apertures, prisms, mirrors, filters, tubes, light sources or any arbitrary components for the technical construction of a microscope.

In another embodiment, the microscope 400 is a surgical microscope. The surgical microscope may comprise e.g. further hardware components enabling a usage of the surgical microscope in surgery. Further hardware components may meet the requirements for a flexible, stable or adjustable positioning of the surgical microscope. The surgical microscope may further comprise multiple interfaces to enable an operation or control of the surgical microscope by several users simultaneously.

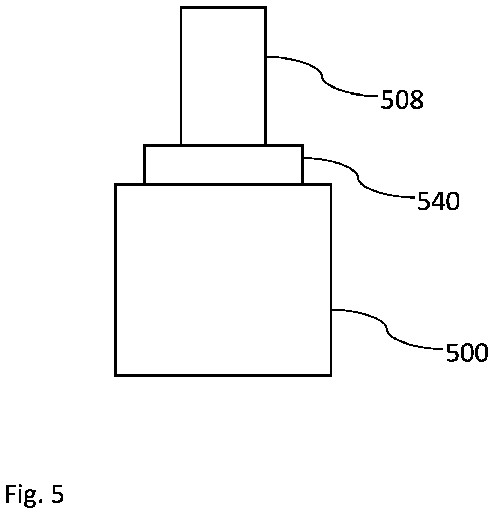

Fig. 5 shows an embodiment of a carrier 540 configured to connect to an imaging system 500 and to an optical system 508. The imaging system 500 comprises a parfocal zoom system configured to receive a beam of light and to generate a real image on a surface of an imaging sensor, wherein the real image is based on a first beam portion. The imaging system 500 further comprises a beam splitter to direct a second beam portion outside the parfocal zoom system and a lens configured to receive the second beam portion. The optical system 508 comprises a tube lens for focusing the second beam portion and an ocular configured to generate a virtual image using the second beam portion. The imaging system 500 may serve as a primary system for imaging an object. The carrier 540 may facilitate an appropriate connection for the imaging system 500 to be equipped with the optical system 508. By this means, optical systems 508 can be detachably mounted on the imaging system 500 to view the object appropriately.

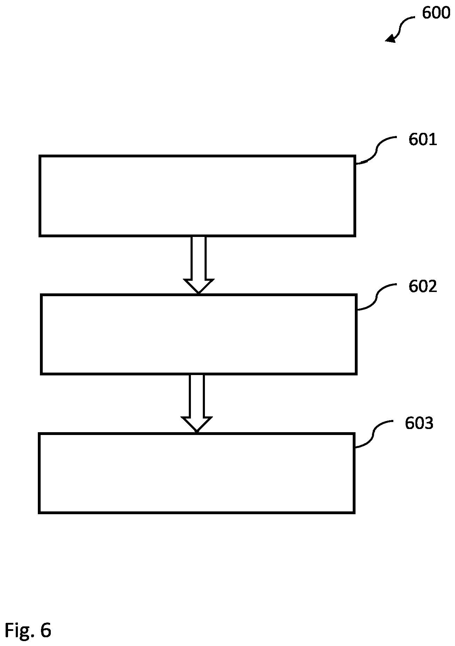

Fig. 6 shows a flow chart of an embodiment of a method 600 for imaging an object. The method 600 comprises receiving 601 a beam of light and generating a real image on a surface of an imaging sensor by means of a parfocal zoom system, wherein the real image is based on a first beam portion. The method 600 further comprises directing 602 a second beam portion outside the parfocal zoom system by means of a beam splitter. Further, the method 600 comprises receiving 603 the second beam portion and providing a viewable output beam by means of an optical system.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference Signs

- 100: Imaging system
- 101: Object
- 102: Parfocal zoom system
- 103: Real image
- 104: Imaging sensor
- 105: Virtual image
- 106: Beam splitter
- 108: Optical system
- 110: Objective
- 200: Imaging system
- 208a: Lens
- 208b: Tube lens
- 208c: Ocular
- 302a,b: Moveable lens system
- 302c: Fixed lens system
- 400: Microscope
- 410: Main lens group
- 411: Mirror
- 420: Camera head
- 430: Interface
- 500: Imaging system
- 508: Optical system
- 540: Carrier
- 600: Method for imaging an object
- 601: Receiving a beam of light and generating a real image on a surface of an imaging sensor by means of a parfocal zoom system, the real image being based on a first beam portion
- 602: directing a second beam portion outside the parfocal zoom system by means of a beam splitter
- 603: receiving the second beam portion and providing a viewable output beam by means of an optical system

## Claims

1. An imaging system (100, 200) for an object (101), comprising
a parfocal zoom system (102) configured to receive a beam of light and to generate a real image (103) on a surface of an imaging sensor (104), the real image (103) being based on a first beam portion;
a beam splitter (106) to direct a second beam portion outside the parfocal zoom system (102); and
an optical system (108) configured to receive the second beam portion and to provide a viewable output beam.

2. The imaging system (100, 200) according to claim 1, wherein
the optical system (108) comprises a lens (208a) configured to project an intermediate image in the second beam portion to infinity.

3. The imaging system (100, 200) according to claim 1 or 2, wherein
the optical system (108) comprises a tube lens (208b) configured to focus the second beam portion to a further intermediate image.

4. The imaging system (100, 200) according to claim 3, wherein
the optical system (108) comprises an ocular (208c) to view the further intermediate image.

5. The imaging system (100, 200) according to one of the preceding claims, further comprising
an objective (110) configured to project a first image of the object which is viewed by the parfocal zoom system (102).

6. The imaging system (100, 200) according to one of the preceding claims, wherein
the parfocal zoom system (102) comprises two movable lens systems (302a-b) and a fixed lens system (302c), the moveable lens systems (302a-b) being movable between the fixed lens system (302c) and the beam splitter (106).

7. A microscope (400) comprising an imaging system (100, 200) according to one of claims 1 to 6.

8. The microscope (400) according to claim 7, wherein the microscope is a surgical microscope.

9. A carrier (540) configured to connect to
an imaging system (500) for an object, comprising
a parfocal zoom system configured to receive a beam of light and to generate a real image on a surface of an imaging sensor, the real image being based on a first beam portion;
a beam splitter to direct a second beam portion outside the parfocal zoom system; and
a lens configured to receive the second beam portion; and
to an optical system (508) comprising a tube lens for focusing the second beam portion and an ocular configured to generate a virtual image using the second beam portion.

10. A method (600) for imaging an object, comprising
receiving (601) a beam of light and generating a real image on a surface of an imaging sensor by means of a parfocal zoom system, the real image being based on a first beam portion;
directing (602) a second beam portion outside the parfocal zoom system by means of a beam splitter; and
receiving (603) the second beam portion and providing a viewable output beam by means of an optical system.

11. The method (600) according to claim 10, wherein providing a viewable output beam
comprises projecting an intermediate image in the second beam portion to infinity by means of a lens.

12. The method (600) according to claim 10 or 11, wherein providing a viewable output beam
comprises focusing the second beam portion to a further intermediate image by means of a tube lens.

13. The method (600) according to claim 12, further comprising
using an ocular to view the further intermediate image.

14. The method (600) according to one of claims 10 to 13, further comprising
using an objective to project a first image of the object which is viewed by the parfocal zoom system.

15. The method (600) according to one of claims 10 to 14, further comprising
moving two lens systems of the parfocal zoom system between a fixed lens system and the beam splitter to change a zoom.
